# EUROPEAN PATENT APPLICATION

(11) **EP 4 841 331 A2**
(43) Date of publication of application: **18.11.2026**
(21) Application number: 26176646.3
(22) Date of filing: 05.05.2026
(51) Int. Cl.: G02B 27/01, G02B 27/00

(54) **INTEGRATED CAMERA FOR EYE-TRACKING**

(30) Priority: 16.05.2025 US 202519211041
(71) Applicant: Meta Platforms Technologies, LLC, Menlo Park, CA 94025 (US)
(72) Inventor: HUNWARDSEN, Matthew Thomas, Menlo Park, 94025 (US); TITTIGER, Alexander, Menlo Park, 94025 (US); HANSEN, Dane Michael, Menlo Park, 94025 (US); MIRJALILI, Ramin, Menlo Park, 94025 (US); ARBABI, Ehsan, Menlo Park, 94025 (US); KUAN, Kevin Andrew, Menlo Park, 94025 (US)
(74) Representative: Murgitroyd & Company

(57) **Abstract**

An eyepiece for a head-mounted device includes a refractive layer and a camera.

The refractive layer includes a prescription curvature on an eye-side of the eyepiece. The camera is at least partially encapsulated in the refractive layer. The camera is configured to image an eyebox region. An air-gap surface of the refractive layer is configured to at least partially offset a distortion of the prescription curvature for eyebox images to be captured by the camera.

## Description

### TECHNICAL FIELD

This disclosure relates generally to optics, and in particular to eye-tracking cameras.

In particular this disclosure relates to an eyepiece for a head-mounted device and to a head-mounted device.

### BACKGROUND INFORMATION

Eye tracking technology enables head mounted devices and other devices to interact with users based on the eye movement or eye orientation of the user. Example eye tracking techniques include capturing images of the eye and then performing image processing of the captured images to determine the movement or position of the eye. To reduce power consumption and to increase accuracy, capturing eye-tracking images with low image distortion is desirable.

### SUMMARY

According to an aspect, there is provided an eyepiece for a head-mounted device comprising:
a refractive layer having a prescription curvature on an eye-side of the eyepiece; and
a camera at least partially encapsulated in the refractive layer, wherein the camera is configured to image an eyebox region, and wherein an air-gap surface of the refractive layer is configured to at least partially offset a distortion of the prescription curvature for eyebox images to be captured by the camera.

In one embodiment, the air-gap surface of the refractive layer offsets a prescription optical power of the prescription curvature.

In one embodiment, the prescription curvature imparts negative optical power, and wherein the air-gap surface of the refractive layer imparts positive optical power.

In one embodiment, the air-gap surface of the refractive layer has a same slope and curvature as the prescription curvature.

In one embodiment, the eyepiece further comprises a display waveguide configured to direct display light to the eyebox region, wherein the prescription curvature is configured to focus display light including virtual images to the eyebox region.

In one embodiment, the eyepiece further comprises:
a lens layer, wherein the display waveguide is disposed between the lens layer and the prescription curvature of the refractive layer,
wherein an optical power of the lens layer combined with the prescription curvature is configured to focus scene light to the eyebox region, the scene light being reflected or scattered from an external environment.

According to another aspect, there is provided a head-mounted device comprising an eyepiece of the kind set out above, wherein the refractive layer is configured to at least partially offset a distortion of the prescription curvature to increase uniformity of a sampling resolution of the eyebox images to be captured by the camera.

In one embodiment, the air-gap surface of the refractive layer offsets a prescription optical power of the prescription curvature.

In one embodiment, the head-mounted device further comprises:
an air-gap setting element coupled to a lens assembly of the camera, wherein the air-gap setting element defines the air-gap surface for the refractive layer molded over the air-gap setting element.

In one embodiment, the refractive layer includes a base refractive layer and focusing refractive layer that includes the prescription curvature, and wherein the base refractive layer is coupled to the focusing refractive layer, the air-gap surface being along a boundary of an air-gap void formed in the focusing refractive layer.

In one embodiment, the air-gap surface is approximately planar and functions as a flat wedge to direct image light toward the camera.

In one embodiment, the prescription curvature is cylindrical and the air-gap surface is configured to negate a cylindrical optical power of the cylindrical prescription curvature.

In one embodiment, the prescription curvature is spherical and the air-gap surface is configured to negate a spherical optical power of the spherical prescription curvature.

In one embodiment, the prescription curvature is configured to focus display light including virtual images to an eyebox region.

According to a further aspect, there is provided a head-mounted device comprising:
an eyepiece including a refractive layer having a focusing curvature on an eye-side of the eyepiece;
a camera at least partially encapsulated in the refractive layer; and
a frame configured to secure the eyepiece, wherein the camera is configured to image an eyebox region through a cutout in the frame and through the refractive layer, and wherein the focusing curvature of the eyepiece expands a Field-of-View (FOV) of the camera.

In one embodiment, the head-mounted device further comprises:
a display waveguide configured to direct display light to the eyebox region, wherein the focusing curvature is configured to focus display light including virtual images to the eyebox region, and wherein the display waveguide includes a cutout to accommodate the camera, the camera being disposed within the cutout of the display waveguide.

In one embodiment, the focusing curvature includes a first surface transitioning into a second surface, wherein the first surface is configured to focus light to an eyebox region, and wherein the second surface is configured to focus eyebox image light to the camera, the second surface configured to increase a field-of-view (FOV) of the camera.

In one embodiment, the second surface is approximately planar.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

Non-limiting and non-exhaustive embodiments of the invention are described with reference to the following figures, wherein like reference numerals refer to like parts throughout the various views unless otherwise specified.
FIG. 1 illustrates a head-mounted device that may include eye-tracking cameras, in accordance with aspects of the disclosure.
FIG. 2 illustrates an example functional diagram of an eyepiece secured by a frame, in accordance with aspects of the disclosure.
FIG. 3 illustrates a camera at least partially encapsulated in a refractive layer, in accordance with aspects of the disclosure.
FIG. 4 illustrates a zoomed-in view of FIG. 3 that shows an air-gap void and an air-gap surface of the refractive layer, in accordance with aspects of the disclosure.
FIG. 5 illustrates a camera including an air-gap setting element, in accordance with aspects of the disclosure.
FIG. 6 illustrates an optical structure including an eye-tracking camera integrated with a base refractive layer, in accordance with aspects of the disclosure.
FIG. 7 illustrates a focusing refractive layer molded over an air-gap setting element, in accordance with aspects of the disclosure.
FIG. 8 illustrates an example functional diagram of an eyepiece secured by a frame having a cutout for a camera, in accordance with aspects of the disclosure.
FIGs. 9A and 9B illustrate example cutouts in a frame of a head-mounted device, in accordance with aspects of the disclosure.
FIG. 10 illustrates an example functional diagram of an eyepiece secured by a frame where a focusing curvature of refractive optic includes a first surface transitioning to a planar second surface, in accordance with aspects of the disclosure.
FIGs. 11 illustrates an example functional diagram of an eyepiece secured by a frame where a focusing curvature of a refractive optic includes a first surface transitioning to a non-planar second surface, in accordance with aspects of the disclosure.
FIGs. 12 illustrates an example functional diagram of an eyepiece including a display waveguide that includes a cutout in the display waveguide, in accordance with aspects of the disclosure.
FIGs. 13 illustrates an example functional diagram of an eyepiece where a camera is not encapsulated and a prism is included in refractive optic, in accordance with aspects of the disclosure.

### DETAILED DESCRIPTION

Embodiments of an integrated camera for eye-tracking are described herein. In the following description, numerous specific details are set forth to provide a thorough understanding of the embodiments. One skilled in the relevant art will recognize, however, that the techniques described herein can be practiced without one or more of the specific details, or with other methods, components, materials, etc. In other instances, well-known structures, materials, or operations are not shown or described in detail to avoid obscuring certain aspects.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In some implementations of the disclosure, the term "near-eye" may be defined as including an element that is configured to be placed within 50 mm of an eye of a user while a near-eye device is being utilized. Therefore, a "near-eye optical element" or a "near-eye system" would include one or more elements configured to be placed within 50 mm of the eye of the user.

In aspects of this disclosure, visible light may be defined as having a wavelength range of approximately 380 nm - 700 nm. Non-visible light may be defined as light having wavelengths that are outside the visible light range, such as ultraviolet light and infrared light. Infrared light having a wavelength range of approximately 700 nm - 1 mm includes near-infrared light. In aspects of this disclosure, near-infrared light may be defined as having a wavelength range of approximately 700 nm - 1.6 µm.

In aspects of this disclosure, the term "transparent" may be defined as having greater than 90% transmission of light. In some aspects, the term "transparent" may be defined as a material having greater than 90% transmission of visible light.

It is desirable for eye-tracking cameras to fit into the form-factor of wearable devices. Smartglasses, Augmented Reality (AR) glasses, Mixed Reality (MR) headsets, and Virtual Reality (VR) headsets are examples of head-mounted devices that may include eye-tracking cameras. It is helpful for eye-tracking cameras to have a perspective of the eyebox region that is not occluded by hair or eyelashes and reducing image distortion of the eye-tracking images captured by the eye-tracking cameras assists in reducing computing and electrical power requirements.

In implementations of the disclosure, eye-tracking cameras are integrated with an eyepiece secured by a frame of a head-mounted device. The camera may be partially encapsulated with a refractive layer of the eyepiece that includes a focusing curvature. The eye-tracking camera may image through the focusing curvature of the refractive layer to capture an eyebox image of an eye of the user in an eyebox region. To reduce distortion of the eyebox images, an air-gap surface of the refractive layer may at least partially offset the distortion imparted by the focusing curvature of the refractive layer. Offsetting the distortion may include increasing the uniformity of a sampling resolution of eyebox images captured by the camera.

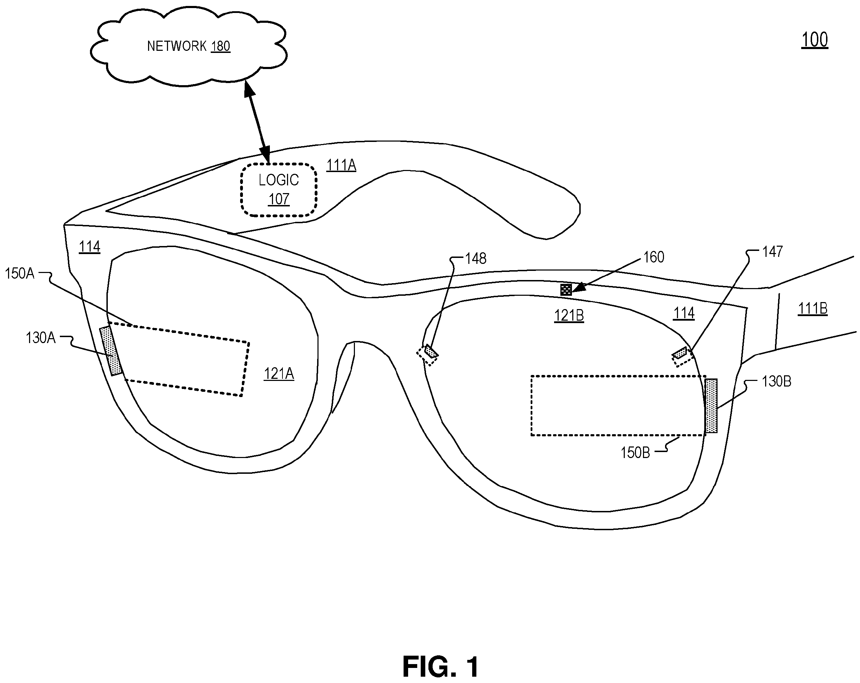

In implementations of the disclosure, an eye-tracking camera is integrated with a refractive layer of an eyepiece secured by a frame of a head-mounted device. The eye-tracking camera is configured to image an eyebox region through a cutout in the frame and through the refractive layer of the eyepiece. The focusing curvature of the refractive layer may expand the Field-of-View (FOV) of the eye-tracking camera. These and other embodiments are described in more detail in connection with FIGs. 1-13.

FIG. 1 illustrates a head-mounted device 100 that may include eye-tracking cameras, in accordance with aspects of the present disclosure. Head-mounted device 100 includes frame 114 coupled to arms 111A and 111B. Frame 114 may be coupled to arms 111A and 111B by way of a mechanical hinge, in some implementations. Eyepieces 121A and 121B are secured by frame 114. Eyepieces 121A and 121B may include a prescription curvature matched to a particular user of head-mounted device 100. The illustrated head-mounted device 100 is configured to be worn on or about a head of a wearer of head-mounted device 100.

In the head-mounted device 100 illustrated in FIG. 1, each eyepiece 121A/121B includes a waveguide 150A/150B to direct image light generated by displays 130A/130B to an eyebox area for viewing by a user of head-mounted device 100. Displays 130A/130B may include a beam-scanning display or a liquid crystal on silicon (LCOS) display for directing display light to a wearer of head-mounted device 100 to present virtual images, for example. Head-mounted devices that include displays may be considered head-mounted displays (HMDs).

Eyepieces 121A and 121B may appear transparent or semi-transparent to a user to facilitate augmented reality or mixed reality to enable a user to view scene light from the environment around them while also receiving display light directed to their eye(s) by, for example, waveguides 150. Eyepieces 121A and 121B may include two or more optical layers for different functionalities such as display, eye-tracking, and optical power. In some embodiments, display light from display 130A or 130B is only directed into one eye of the wearer of head-mounted device 100. In an embodiment, both displays 130A and 130B are used to direct display light into waveguides 150A and 150B, respectively. The implementations of the disclosure may also be used in head mounted devices (e.g. smartglasses) that don't necessarily include a display but are configured to be worn on or about a head of a wearer.

Frame 114 and arms 111 may include supporting hardware of head-mounted device 100 such as processing logic 107, a wired and/or wireless data interface for sending and receiving data, graphic processors, and one or more memories for storing data and computer-executable instructions. Processing logic 107 may include circuitry, logic, instructions stored in a machine-readable storage medium, ASIC circuitry, FPGA circuitry, and/or one or more processors. In one embodiment, head-mounted device 100 may be configured to receive wired power. In one embodiment, head-mounted device 100 is configured to be powered by one or more batteries. In one embodiment, head-mounted device 100 may be configured to receive wired data including video data via a wired communication channel. In one embodiment, head-mounted device 100 is configured to receive wireless data including video data via a wireless communication channel. Processing logic 107 may be communicatively coupled to a network 180 to provide data to network 180 and/or access data within network 180. The communication channel between processing logic 107 and network 180 may be wired or wireless.

In the illustrated implementation of FIG. 1, head-mounted device 100 includes example eye-tracking cameras 147 and 148. Cameras 147 and 148 are configured to image an eyebox region. Cameras 147 and 148 show example placements of eye-tracking cameras that are integrated with eyepiece 121B. Camera 147 shows an example nasal-region positioning of an eye-tracking camera while camera 148 shows an example temple-region positioning of an eye-tracking camera. Other positions are also possible. While not specifically illustrated, eye-tracking cameras may also be integrated with eyepiece 121A in order to generate eyebox images of a right eye of a wearer of head-mounted device 100.

In some implementations, an illumination module 160 may illuminate the eyebox region with near-infrared illumination light to assist cameras 147 and/or 148 in imaging the eyebox region for eye-tracking purposes. Cameras 147 and/or 148 may include a lens assembly configured to focus image light to a complementary metal-oxide semiconductor (CMOS) image sensor, in some implementations. A near-infrared filter that receives a narrow-band near-infrared wavelength may be placed over the image sensor so it is sensitive to the narrow-band near-infrared wavelength while rejecting visible light and wavelengths outside the narrow-band. Near-infrared illuminators (not illustrated) such as near-infrared LEDs or lasers that emit the narrow-band wavelength may be included in an illumination module 160 to illuminate the eyebox region with the narrow-band near-infrared wavelength.

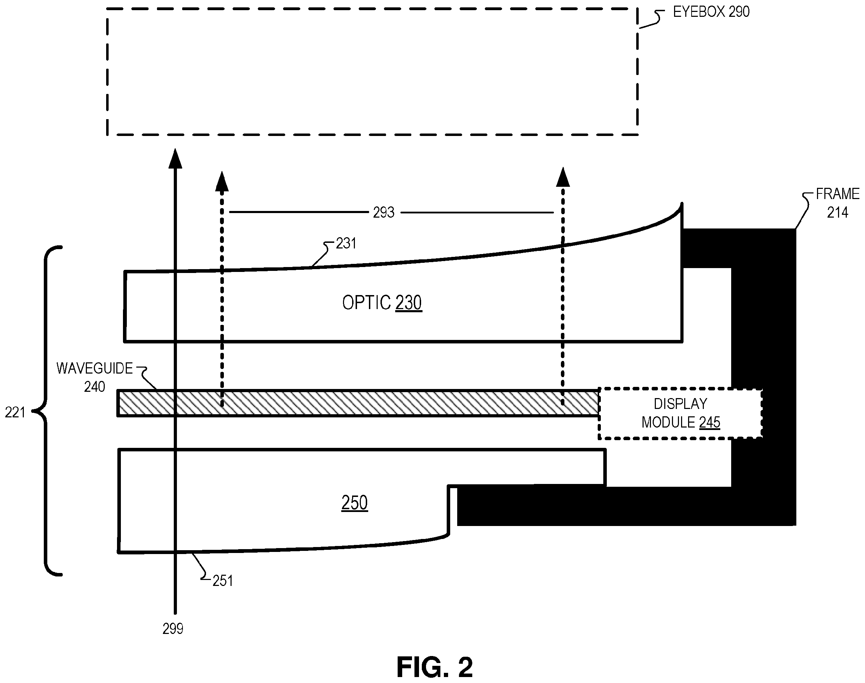

FIG. 2 illustrates an example functional diagram of eyepiece 221 secured by frame 214, in accordance with aspects of the disclosure. Example eyepiece 221 includes a refractive optic 230, a display waveguide 240, and a lens layer 250. Display waveguide 240 is disposed between the lens layer 250 and the refractive optic 230, in FIG. 2. In the illustrated implementations, display waveguide 240 is spaced apart from both lens layer 250 and refractive optic 230. In some implementations, one or more of components 230, 240, and 250 are bonded together. Componenets 230, 240, and 250 may be bonded together at the edges of eyepiece 221 (not particularly illustrated) while spaced apart in the center of eyepiece 221.

Refractive optic 230 and lens layer 250 may be fabricated from a refractive material. Refractive optic 230 includes a focusing curvature 231 that may be a prescription curvature specific to a particular wearer of a head-mounted device. Focusing curvature 231 may be configured to focus display light 293 received from display waveguide 240 to eyebox region 290. Display light 293 may include virtual images generated by display module 245 and directed into waveguide 240 for presentation to eyebox region 290. Display module 245 may include the features described with respect to displays 130, for example. Display module 245 may be at least partially included in frame 214 in a temple-region of frame 214, in some implementations.

In some implementations, an optical power imparted by curvature 251 of lens layer 250 combined with the focusing curvature 231 of refractive optic 230 focuses scene light 299 to eyebox region 290. Scene light 299 may be reflected or scattered from the external environment. For example, a light source (e.g. sun or electrical lighting) may illuminate objects in the external environment and the objects reflect and/or scatter scene light 299. In some implementations, the optical power of focusing curvature 231 offsets the optical power imparted by curvature 251.

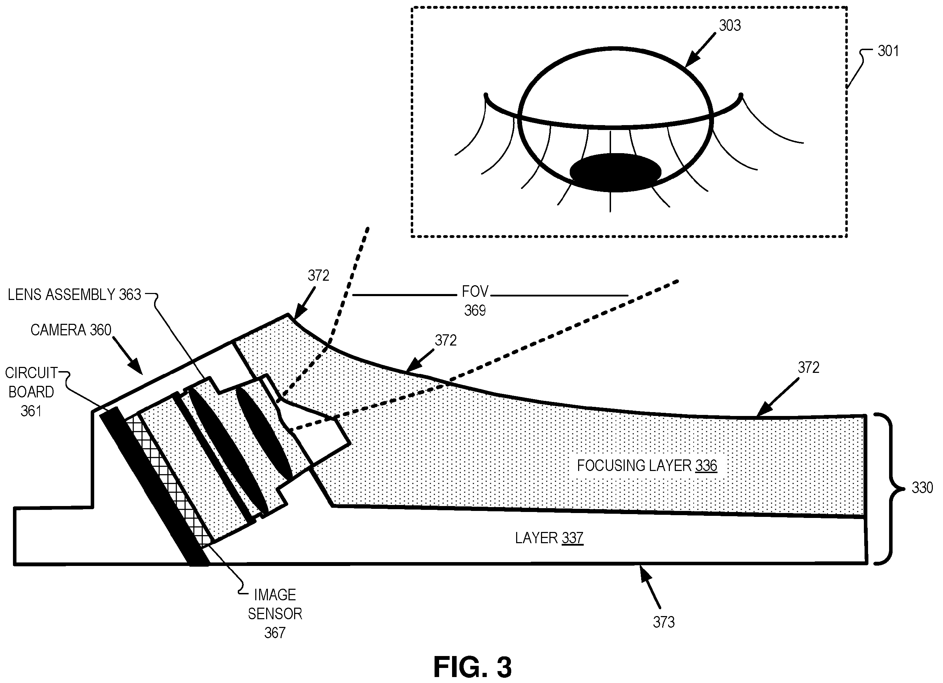

FIG. 3 illustrates a camera 360 at least partially encapsulated in a refractive layer 330, in accordance with aspects of the disclosure. Refractive layer 330 includes a focusing refractive layer 336 and a base refractive layer 337. The focusing refractive layer 336 includes a focusing curvature 372 that may be a prescription focusing curvature specific to an optical prescription of a particular wearer of a head-mounted device. The base refractive layer 337 is coupled to the focusing refractive layer 336. Base refractive layer 337 may be coupled to the focusing refractive layer 336 with an index matching optical adhesive, in some implementations. Base refractive layer 337 may include a planar side 373 opposite the focusing curvature 372 of focusing refractive layer 336.

Example eye-tracking camera 360 includes a lens assembly 363 configured to focus image light to an image sensor 367. Lens assembly 363 may have a plurality of optical elements such as refractive lenses, diffractive optics, and/or filters to focus and/or filter the image light that reaches pixels of image sensor 367. Filters included in lens assembly 363 may include bandpass near-infrared filters. Image sensor 367 may be electrically coupled to circuit board 361 that provides traces for routing power and data to image sensor 367. Image sensor 367 may be a CMOS image sensor, in some implementations. Camera 360 is configured to image an eye 303 in an eyebox region 301. Notably, camera 360 is configured to image eyebox region 301 through focusing refractive layer 336 and thus focusing curvature 372 influences the FOV 369 of camera 360. Focusing curvature 372 may distort eyebox images captured by eye-tracking camera 360.

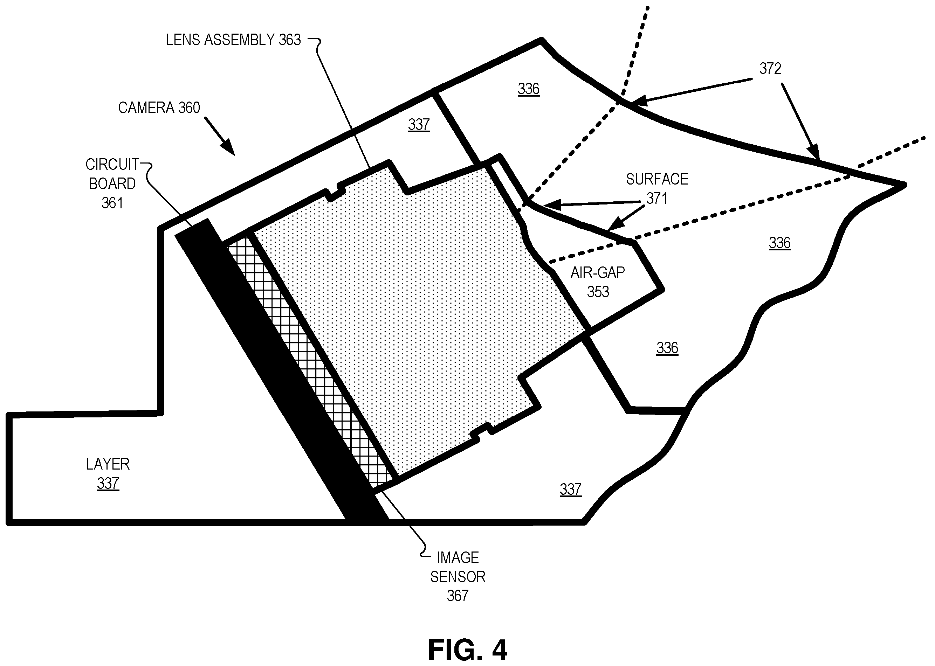

FIG. 4 illustrates a zoomed-in view of FIG. 3 that shows an air-gap void 353 and an air-gap surface 371 of the refractive layer 330, in accordance with aspects of the disclosure. In FIG. 4, air-gap surface 371 is along a boundary of an air-gap void 353 formed in the focusing refractive layer 336. Air-gap surface 371 of refractive layer 330 is configured to at least partially offset a distortion of the focusing curvature 372 to increase uniformity of a sampling resolution of eyebox images to be captured by camera 360. Focusing curvature 372 may be a prescription curvature. Increasing the uniformity of a sampling resolution of the eyebox images may be especially important when the shape of focusing curvature 372 reduces the resolution of the eyebox images on one side of the image while increasing the resolution on the opposite side of the image. This distortion then requires increased image processing computing power to correct the distortion imparted by the focusing curvature 372. Air-gap void 353 may be no more than slightly wider than lens assembly 363, in some implementations. Air-gap void 353 may be less than the width of lens assembly 363, in some implementations. Air-gap void 353 and air-gap surface 371 are on an opposite side of focusing refractive layer 336 as focusing curvature 372.

In some implementations, air-gap surface 371 offsets the optical power of the focusing curvature 372. In some implementations, focusing curvature 372 imparts negative optical power and the air-gap surface 371 imparts positive optical power. In some implementations, air-gap surface 371 has a same slope and curvature as focusing curvature 372.

In some implementations, air-gap surface 371 is approximately planar and functions as a flat wedge to direct image light toward camera 360. In some implementations, focusing curvature 372 is cylindrical and air-gap surface 371 is configured to negate a cylindrical optical power of the cylindrical focusing curvature 372. In some implementations, focusing curvature 372 is spherical and air-gap surface 371 is configured to negate a spherical optical power of the spherical focusing curvature 372.

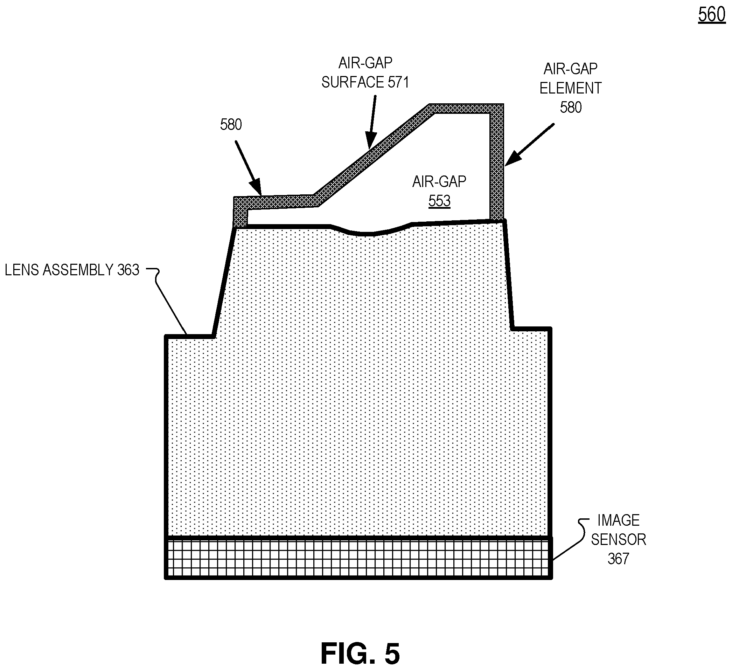

FIG. 5 illustrates a camera 560 including an air-gap setting element 580, in accordance with aspects of the disclosure. Camera 560 includes image sensor 367 and lens assembly 363 configured to focus image light to an imaging plane of image sensor 367. Air-gap setting element 580 is coupled to lens assembly 363. In some implementations, air-gap setting element 580 is adhered to lens assembly 363. Air-gap setting element 580 may be fabricated from a transparent material. Air-gap setting element 580 may be fabricated from a transparent material having the same, or approximately the same, refractive index as a focusing refractive layer that will contact or be adhered to air-gap setting element 580.

Air-gap setting element 580 provides an air-gap 553 and defines air-gap surface 571. Air-gap surface 571 may be planar, spherical, aspherical, cylindrical, or freeform. Air-gap surface 571 may have the features described with respect to air-gap surface 371.

In some implementations, a variety of different air-gap setting elements can be matched to various optical prescriptions associated with different focusing curvatures 772. For example, ten different air-gap setting elements may correspond with ten different focusing curvatures defined by ten different molds. In this way, air-gap surface 571 of the air-gap setting element can be matched to a particular focusing curvature 772 of a certain prescription to offset a distortion of the focusing curvature to increase uniformity of a sampling resolution of eyebox images captured by the eye-tracking camera.

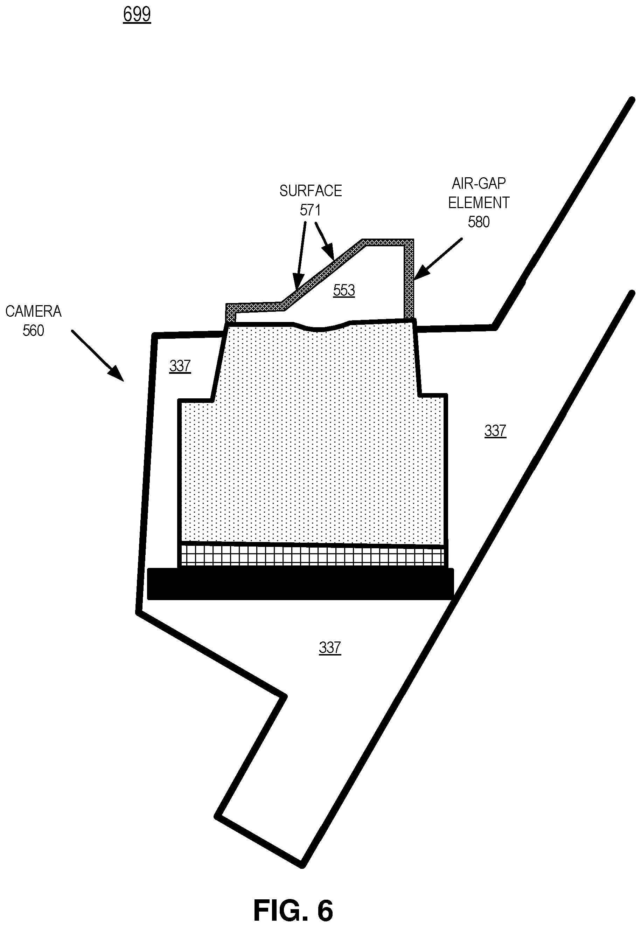

FIG. 6 illustrates an optical structure 699 including an eye-tracking camera 560 integrated with base refractive layer 337, in accordance with aspects of the disclosure. Eye-tracking camera 560 may be encapsulated within base refractive layer 337, in some implementations.

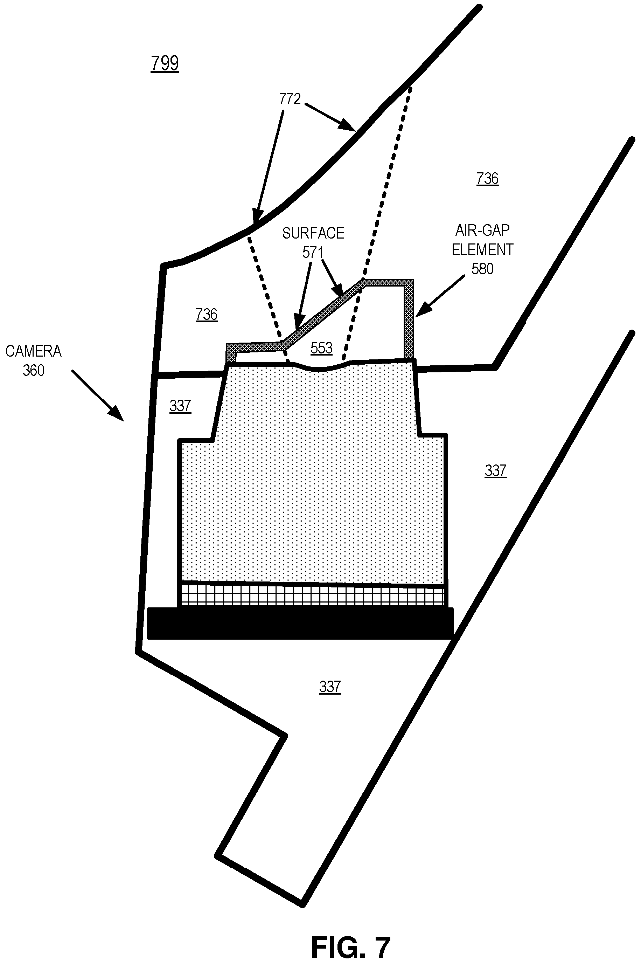

FIG. 7 illustrates a focusing refractive layer 736 molded over air-gap setting element 580, in accordance with aspects of the disclosure. In some implementations of the disclosure, focusing refractive layer 736 is over-molded onto optical structure 699 to form optical structure 799. In this implementation, the dimensions of focusing refractive layer 736 are determined by a mold that may be injected with a moldable refractive material to form focusing refractive layer 736. Focusing curvature 772 may also be determined by the boundaries of the mold while air-gap setting element 580 defines air-gap surface 571 as the moldable refractive material is provided over air-gap surface 571 and subsequently cured. Air-gap surface 571 may include the features and characteristics described with respect to air-gap surface 371.

In some implementations, air-gap surface 571 offsets the optical power of the focusing curvature 772. In some implementations, focusing curvature 772 imparts negative optical power and the air-gap surface 571 imparts positive optical power. In some implementations, air-gap surface 571 has a same slope and curvature as focusing curvature 772.

In some implementations, air-gap surface 571 is approximately planar and functions as a flat wedge to direct image light toward camera 360. In some implementations, focusing curvature 772 is cylindrical and air-gap surface 571 is configured to negate a cylindrical optical power of the cylindrical focusing curvature 772. In some implementations, focusing curvature 772 is spherical and air-gap surface 571 is configured to negate a spherical optical power of the spherical focusing curvature 772.

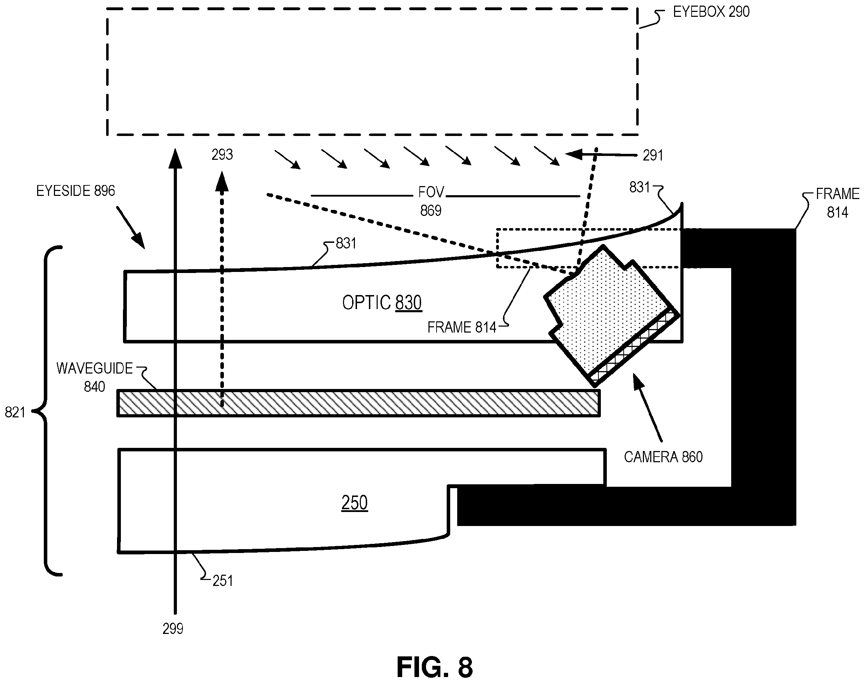

FIG. 8 illustrates an example functional diagram of eyepiece 821 secured by frame 814 having a cutout for a camera 860, in accordance with aspects of the disclosure. Example eyepiece 821 includes a refractive optic 830, a display waveguide 840, and a lens layer 250. Display waveguide 840 is disposed between the lens layer 250 and the refractive optic 830, in FIG. 8. Refractive optic 830 and lens layer 250 may be fabricated from a refractive material. Refractive optic 830 includes a focusing curvature 831 on an eyeside 896 of refractive optic 830 that may be a prescription curvature specific to a particular wearer of a head-mounted device. Focusing curvature 831 may be configured to focus display light 293 received from display waveguide 840 to eyebox region 290. Display light 293 may include virtual images generated by a display module (not particularly illustrated) and directed into waveguide 840 for presentation to eyebox region 290. FIG. 8 may illustrate a nasal region of frame 814 and the display module may be positioned in a temple region of frame 814.

In some implementations, an optical power imparted by curvature 251 of lens layer 250 combined with the focusing curvature 831 of refractive optic 830 focuses scene light 299 to eyebox region 290. Scene light 299 may be reflected or scattered from the external environment. In some implementations, the optical power of focusing curvature 831 offsets the optical power imparted by curvature 251.

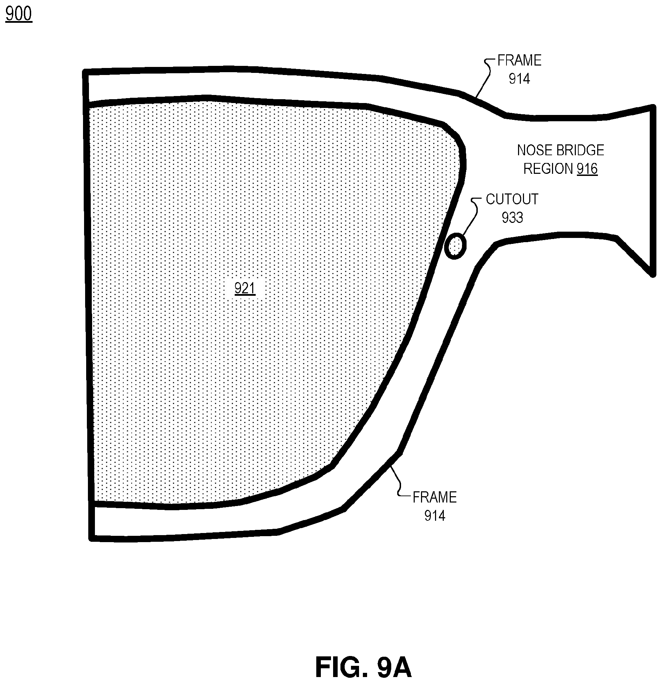

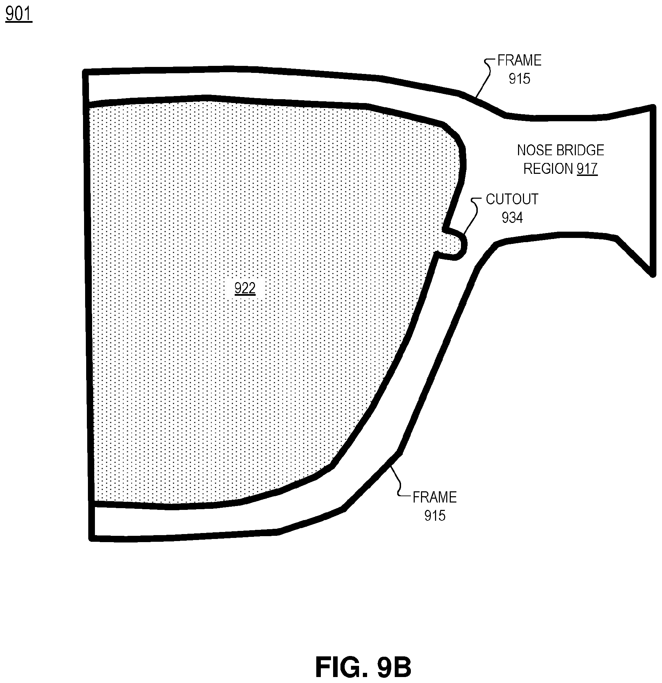

FIG. 8 illustrates that frame 814 extends beyond camera 860 and also extends partially over refractive optic 830. The illustrated dashed-lines of frame 814 are the portion of frame 814 partially extending over refractive optic 830. Camera 860 is configured to image eyebox region 290 through a cutout (example cutouts illustrated in FIGs. 9A and 9B) in frame 814 and through refractive optic 830. Focusing curvature 831 of refractive optic 830 assists to expand the FOV 869 of camera 860 to include a large portion of eyebox region 290 and focus eyebox image light 291 to camera 860.

FIG. 9A illustrates an example cutout 933 in frame 914, in accordance with aspects of the disclosure. FIG. 9A shows a portion of a head-mounted device 900 from the perspective of a user. In other words, FIG. 9A shows the eyeside of frame 914 rather than the world-facing side of frame 914. Head-mounted device 900 includes a frame 914 securing an eyepiece 921. Frame 914 includes a nose bridge region 916 and cutout 933 is in a nasal region that is in, or proximate to, nose bridge region 916. Thus, camera 860 may image the eyebox region through cutout 933 and through the refractive layer of eyepiece 921. Cutout 933 is a void in frame 914 that is also surrounded by frame 914. While cutout 933 is illustrated near a nasal region of frame 914, cutout 933 may be in the temple region of a glasses frame 914 or elsewhere in the glasses frame 914.

FIG. 9B illustrates an example cutout 934 in frame 915, in accordance with aspects of the disclosure. FIG. 9B shows a portion of a head-mounted device 901 from the perspective of a user. Head-mounted device 901 includes a frame 915 securing an eyepiece 922. Frame 915 includes a nose bridge region 917 and cutout 934 is in a nasal region that is in, or proximate to, nose bridge region 917. Thus, camera 860 may image the eyebox region through cutout 934 and through the refractive layer of eyepiece 922. Cutout 934 is a void in frame 915 that is a notch in frame 915, but not fully surrounded by frame 915. While cutout 934 is illustrated near a nasal region of frame 915, cutout 934 may be in the temple region of a glasses frame 915 or elsewhere in the glasses frame 915.

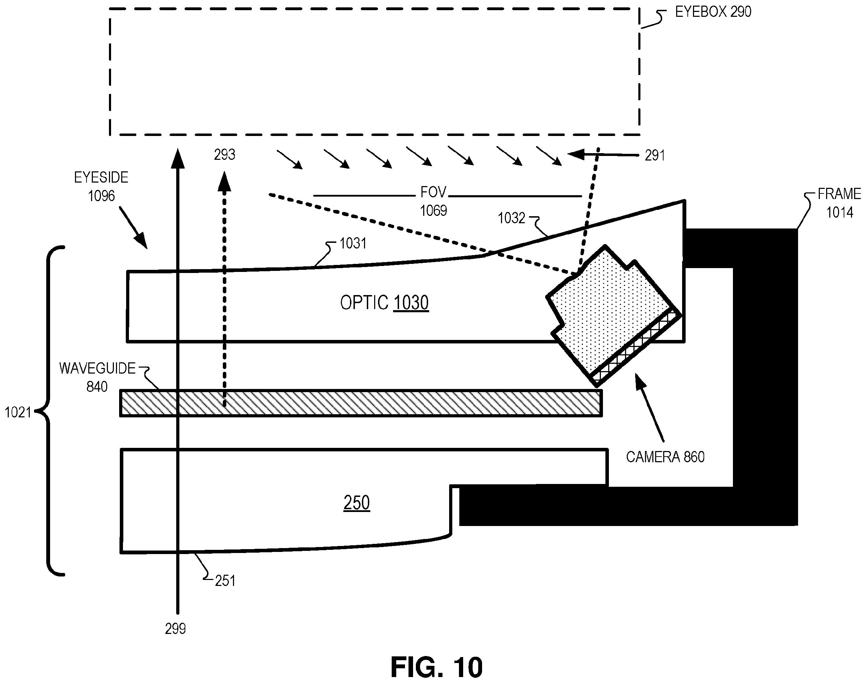

FIG. 10 illustrates an example functional diagram of eyepiece 1021 secured by frame 1014 where a focusing curvature of refractive optic 1030 includes a first surface 1031 transitioning to a planar second surface 1032, in accordance with aspects of the disclosure. Example eyepiece 1021 includes a refractive optic 1030, a display waveguide 840, and a lens layer 250. Display waveguide 840 is disposed between the lens layer 250 and the refractive optic 1030, in FIG. 10. Refractive optic 1030 and lens layer 250 may be fabricated from a refractive material. Refractive optic 1030 includes a focusing curvature on an eyeside 1096 of refractive optic 1030 that includes a first surface 1031 and a second surface 1032. First surface 1031 may be a prescription curvature specific to a particular wearer of a head-mounted device. First surface 1031 of the focusing curvature may be configured to focus display light 293 received from display waveguide 840 to eyebox region 290. Planar second surface 1032 of the focusing curvature of refractive optic 1030 is configured to expand the FOV 1069 of camera 860 to image a wider eyebox region 290. Utilizing a planar second surface 1032 may simplify fabrication steps and reduce costs.

Camera 860 may be integrated with refractive optic 1030 in order to reduce the form-factor of a head-mounted device while also providing a suitable perspective for camera 860 to image eyebox region 290. In some implementations, camera 860 is at least partially encapsulated with refractive optic 1030.

In some implementations, an optical power imparted by curvature 251 of lens layer 250 combined with the curvature of first surface 1031 of refractive optic 1030 focuses scene light 299 to eyebox region 290. In some implementations, the optical power of the first surface 1031 of the focusing curvature offsets the optical power imparted by curvature 251.

For drawing clarity, the portion of frame 1014 that extends partially over refractive optic 1030 is not illustrated in FIG. 10. However, camera 860 is configured to image eyebox region 290 through a cutout (example cutouts illustrated in FIGs. 9A and 9B) in frame 1014 and through refractive optic 1030.

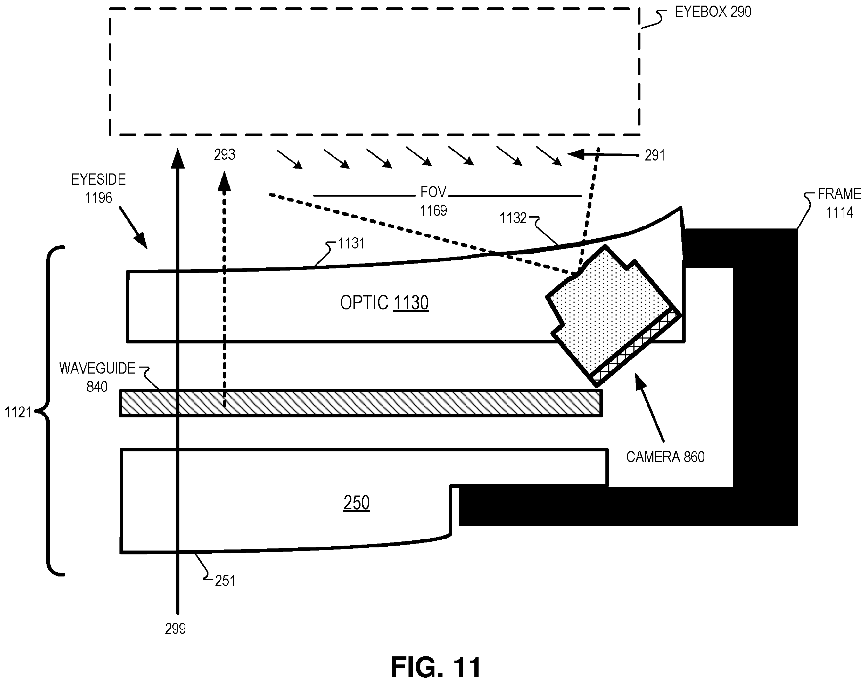

FIG. 11 illustrates an example functional diagram of eyepiece 1121 secured by frame 1114 where a focusing curvature of refractive optic 1130 includes a first surface 1131 transitioning to a non-planar second surface 1132, in accordance with aspects of the disclosure. Example eyepiece 1121 includes a refractive optic 1130, a display waveguide 840, and a lens layer 250. Display waveguide 840 is disposed between the lens layer 250 and the refractive optic 1130, in FIG. 11. Refractive optic 1130 and lens layer 250 may be fabricated from a refractive material. Refractive optic 1130 includes a focusing curvature on an eyeside 1196 of refractive optic 1130 that includes a first surface 1131 and a second surface 1132. First surface 1131 may be a prescription curvature specific to a particular wearer of a head-mounted device. First surface 1131 of the focusing curvature may be configured to focus display light 293 received from display waveguide 840 to eyebox region 290. Second surface 1132 of the focusing curvature of refractive optic 1130 is configured to expand the FOV 1169 of camera 860 to image a wider eyebox region 290. Second surface 1132 is non-planar. Second surface 1132 may be spherical, aspherical, cylindrical, or freeform.

Camera 860 may be integrated with refractive optic 1130 in order to reduce the form-factor of a head-mounted device while also providing a suitable perspective for camera 860 to image eyebox region 290. In some implementations, camera 860 is at least partially encapsulated with refractive optic 1130.

In some implementations, an optical power imparted by curvature 251 of lens layer 250 combined with the curvature of first surface 1131 of refractive optic 1130 focuses scene light 299 to eyebox region 290. In some implementations, the optical power of the first surface 1131 of the focusing curvature curvature offsets the optical power imparted by curvature 251.

For drawing clarity, the portion of frame 1114 that extends partially over refractive optic 1130 is not illustrated in FIG. 11. However, camera 860 is configured to image eyebox region 290 through a cutout (example cutouts illustrated in FIGs. 9A and 9B) in frame 1114 and through refractive optic 1130.

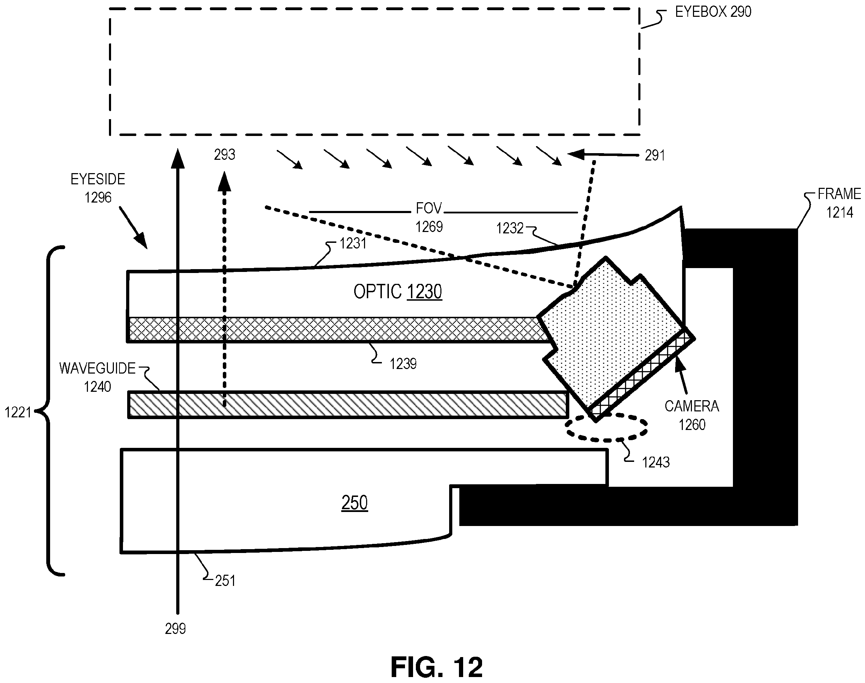

FIG. 12 illustrates an example functional diagram of eyepiece 1221 including a display waveguide 1240 that includes a cutout 1243 in the display waveguide, in accordance with aspects of the disclosure. Example eyepiece 1221 includes a refractive optic 1230, a display waveguide 1240, and a lens layer 250. Display waveguide 1240 is disposed between the lens layer 250 and the refractive optic 1230, in FIG. 12. Refractive optic 1230 and lens layer 250 may be fabricated from a refractive material. Refractive optic 1230 includes a focusing curvature on an eyeside 1296 of refractive optic 1230 that includes a first surface 1231 and a second surface 1232. First surface 1231 may be a prescription curvature specific to a particular wearer of a head-mounted device. First surface 1231 of the focusing curvature may be configured to focus display light 293 received from display waveguide 840 to eyebox region 290. Second surface 1232 of the focusing curvature of refractive optic 1230 is configured to expand the FOV 1269 of camera 1260 to image a wider eyebox region 290.

In FIG. 12, refractive optic 1230 includes a refractive extension layer 1239. Refractive extension layer 1239 may serve to encapsulate camera 1260 in order to secure camera 1260 in a particular position with respect to refractive optic 1230.

FIG. 12 also shows that camera 1260 is disposed within a cutout 1243 of display waveguide 1240. A cutout in display waveguide 1240 may be necessary to accommodate the footprint to position camera 1260.

In some implementations, an optical power imparted by curvature 251 of lens layer 250 combined with the curvature of first surface 1231 of refractive optic 1230 focuses scene light 299 to eyebox region 290. In some implementations, the optical power of first surface 1231 of the focusing curvature offsets the optical power imparted by curvature 251.

For drawing clarity, the portion of frame 1214 that extends partially over refractive optic 1230 is not illustrated in FIG. 12. However, camera 1260 is configured to image eyebox region 290 through a cutout (example cutouts illustrated in FIGs. 9A and 9B) in frame 1214 and through refractive optic 1230.

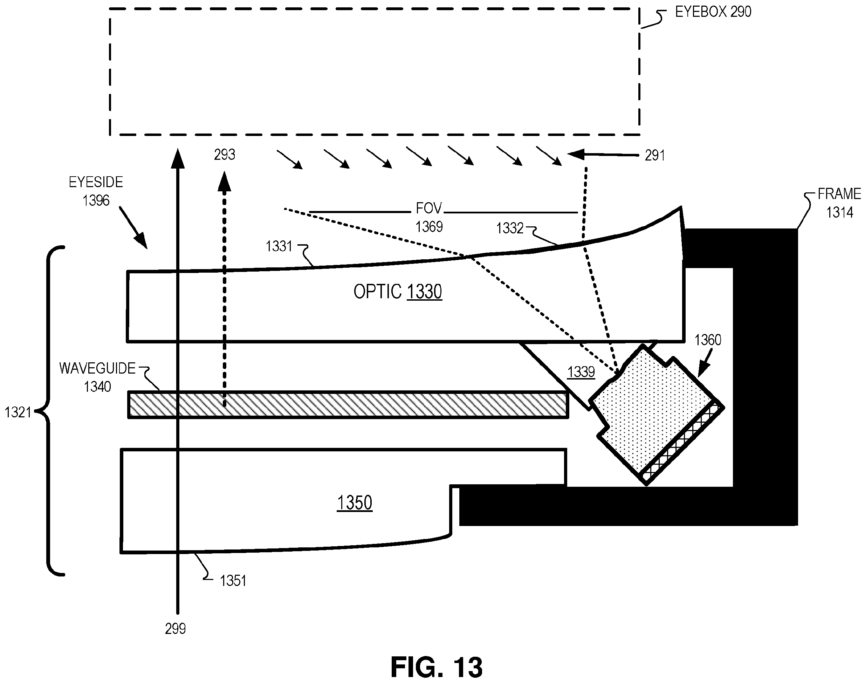

FIG. 13 illustrates an example functional diagram of eyepiece 1321 where camera 1360 is not encapsulated and a prism 1339 is included in refractive optic 1330, in accordance with aspects of the disclosure. Example eyepiece 1321 includes a refractive optic 1330, a display waveguide 1340, and a lens layer 1350. Display waveguide 1340 is disposed between the lens layer 1350 and the refractive optic 1330, in FIG. 13. Refractive optic 1330 and lens layer 1350 may be fabricated from a refractive material. Refractive optic 1330 includes a focusing curvature on an eyeside 1396 of refractive optic 1330 that includes a first surface 1331 and a second surface 1332. First surface 1331 may be a prescription curvature specific to a particular wearer of a head-mounted device. First surface 1331 of the focusing curvature may be configured to focus display light 293 received from display waveguide 1340 to eyebox region 290. Second surface 1332 of the focusing curvature of refractive optic 1330 is configured to expand the FOV 1369 of camera 1360 to image a wider eyebox region 290.

In FIG. 13, prism 1339 is included in refractive optic 1330. Prism 1339 may be a contiguous material with refractive optic 1330, in some implementations. In some implementations, prism 1339 is a feature in a mold that fabricates optic 1330 and prism 1339 in a same injection molding fabrication process. Prism 1339 may be adhered to refractive optic with an index matching adhesive, in some implementations. Prism 1339 is disposed between display waveguide 1340 and a camera-side of refractive optic 1330. Prism 1339 may further function to shape and expand the FOV 1369 of camera 1360. Second surface 1332 may combine with prism 1339 to shape and expand the FOV 1369 of camera 1360.

To accommodate prism 1339 and unencapsulated camera 1360, a cutout may be necessary in display waveguide 1340. Additionally, lens layer 1350 may be shortened compared with lens layer 1250 in order to provide space for camera 1360.

In some implementations, an optical power imparted by curvature 1351 of lens layer 1350 combined with the curvature of first surface 1331 of refractive optic 1330 focuses scene light 299 to eyebox region 290. In some implementations, the optical power of focusing curvature 1331 offsets the optical power imparted by curvature 1351.

For drawing clarity, the portion of frame 1314 that extends partially over refractive optic 1330 is not illustrated in FIG. 13. However, camera 1360 is configured to image eyebox region 290 through a cutout (example cutouts illustrated in FIGs. 9A and 9B) in frame 1314 and through refractive optic 1330.

Embodiments of the invention may include or be implemented in conjunction with an artificial reality system. Artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof. Artificial reality content may include completely generated content or generated content combined with captured (e.g., real-world) content. The artificial reality content may include video, audio, haptic feedback, or some combination thereof, and any of which may be presented in a single channel or in multiple channels (such as stereo video that produces a three-dimensional effect to the viewer). Additionally, in some embodiments, artificial reality may also be associated with applications, products, accessories, services, or some combination thereof, that are used to, e.g., create content in an artificial reality and/or are otherwise used in (e.g., perform activities in) an artificial reality. The artificial reality system that provides the artificial reality content may be implemented on various platforms, including a head-mounted display (HMD) connected to a host computer system, a standalone HMD, a mobile device or computing system, or any other hardware platform capable of providing artificial reality content to one or more viewers.

The term "processing logic" (e.g. processing logic 107) in this disclosure may include one or more processors, microprocessors, multi-core processors, Application-specific integrated circuits (ASIC), and/or Field Programmable Gate Arrays (FPGAs) to execute operations disclosed herein. In some embodiments, memories (not illustrated) are integrated into the processing logic to store instructions to execute operations and/or store data. Processing logic may also include analog or digital circuitry to perform the operations in accordance with embodiments of the disclosure.

A "memory" or "memories" described in this disclosure may include one or more volatile or non-volatile memory architectures. The "memory" or "memories" may be removable and non-removable media implemented in any method or technology for storage of information such as computer-readable instructions, data structures, program modules, or other data. Example memory technologies may include RAM, ROM, EEPROM, flash memory, CD-ROM, digital versatile disks (DVD), high-definition multimedia/data storage disks, or other optical storage, magnetic cassettes, magnetic tape, magnetic disk storage or other magnetic storage devices, or any other non-transmission medium that can be used to store information for access by a computing device.

Networks may include any network or network system such as, but not limited to, the following: a peer-to-peer network; a Local Area Network (LAN); a Wide Area Network (WAN); a public network, such as the Internet; a private network; a cellular network; a wireless network; a wired network; a wireless and wired combination network; and a satellite network.

Communication channels may include or be routed through one or more wired or wireless communication utilizing IEEE 802.11 protocols, short-range wireless protocols, SPI (Serial Peripheral Interface), I²C (Inter-Integrated Circuit), USB (Universal Serial Port), CAN (Controller Area Network), cellular data protocols (e.g. 3G, 4G, LTE, 5G), optical communication networks, Internet Service Providers (ISPs), a peer-to-peer network, a Local Area Network (LAN), a Wide Area Network (WAN), a public network (e.g. "the Internet"), a private network, a satellite network, or otherwise.

A computing device may include a desktop computer, a laptop computer, a tablet, a phablet, a smartphone, a feature phone, a server computer, or otherwise. A server computer may be located remotely in a data center or be stored locally.

The processes explained above are described in terms of computer software and hardware. The techniques described may constitute machine-executable instructions embodied within a tangible or non-transitory machine (e.g., computer) readable storage medium, that when executed by a machine will cause the machine to perform the operations described. Additionally, the processes may be embodied within hardware, such as an application specific integrated circuit ("ASIC") or otherwise.

A tangible non-transitory machine-readable storage medium includes any mechanism that provides (i.e., stores) information in a form accessible by a machine (e.g., a computer, network device, personal digital assistant, manufacturing tool, any device with a set of one or more processors, etc.). For example, a machine-readable storage medium includes recordable/non-recordable media (e.g., read only memory (ROM), random access memory (RAM), magnetic disk storage media, optical storage media, flash memory devices, etc.).

The above description of illustrated embodiments of the invention, including what is described in the Abstract, is not intended to be exhaustive or to limit the invention to the precise forms disclosed. While specific embodiments of, and examples for, the invention are described herein for illustrative purposes, various modifications are possible within the scope of the invention, as those skilled in the relevant art will recognize.

These modifications can be made to the invention in light of the above detailed description. The terms used in the following claims should not be construed to limit the invention to the specific embodiments disclosed in the specification. Rather, the scope of the invention is to be determined entirely by the following claims, which are to be construed in accordance with established doctrines of claim interpretation.

## Claims

1. An eyepiece for a head-mounted device comprising:
a refractive layer having a prescription curvature on an eye-side of the eyepiece; and
a camera at least partially encapsulated in the refractive layer, wherein the camera is configured to image an eyebox region, and wherein an air-gap surface of the refractive layer is configured to at least partially offset a distortion of the prescription curvature for eyebox images to be captured by the camera.

2. The eyepiece of claim 1, wherein the air-gap surface of the refractive layer offsets a prescription optical power of the prescription curvature.

3. The eyepiece of claim 1 or claim 2, wherein the prescription curvature imparts negative optical power, and wherein the air-gap surface of the refractive layer imparts positive optical power.

4. The eyepiece of any preceding claim, wherein the air-gap surface of the refractive layer has a same slope and curvature as the prescription curvature.

5. The eyepiece of any preceding claim, further comprising:
a display waveguide configured to direct display light to the eyebox region, wherein the prescription curvature is configured to focus display light including virtual images to the eyebox region,
and optionally further comprising:
a lens layer, wherein the display waveguide is disposed between the lens layer and the prescription curvature of the refractive layer,
wherein an optical power of the lens layer combined with the prescription curvature is configured to focus scene light to the eyebox region, the scene light being reflected or scattered from an external environment.

6. A head-mounted device comprising an eyepiece according to any preceding claim, wherein the refractive layer is configured to at least partially offset a distortion of the prescription curvature to increase uniformity of a sampling resolution of the eyebox images to be captured by the camera.

7. The head-mounted device of claim 6, wherein the air-gap surface of the refractive layer offsets a prescription optical power of the prescription curvature.

8. The head-mounted device of claim 6 or claim 7 further comprising:
an air-gap setting element coupled to a lens assembly of the camera, wherein the air-gap setting element defines the air-gap surface for the refractive layer molded over the air-gap setting element.

9. The head-mounted device of any of claims 6 to 8, wherein the refractive layer includes a base refractive layer and focusing refractive layer that includes the prescription curvature, and wherein the base refractive layer is coupled to the focusing refractive layer, the air-gap surface being along a boundary of an air-gap void formed in the focusing refractive layer.

10. The head-mounted device of any of claims 6 to 9, wherein the air-gap surface is approximately planar and functions as a flat wedge to direct image light toward the camera.

11. The head-mounted device of any of claims 6 to 10, wherein either:
the prescription curvature is cylindrical and the air-gap surface is configured to negate a cylindrical optical power of the cylindrical prescription curvature, or
the prescription curvature is spherical and the air-gap surface is configured to negate a spherical optical power of the spherical prescription curvature.

12. The head-mounted device of any of claims 6 to 11, wherein the prescription curvature is configured to focus display light including virtual images to an eyebox region.

13. A head-mounted device comprising:
an eyepiece including a refractive layer having a focusing curvature on an eye-side of the eyepiece;
a camera at least partially encapsulated in the refractive layer; and
a frame configured to secure the eyepiece, wherein the camera is configured to image an eyebox region through a cutout in the frame and through the refractive layer, and wherein the focusing curvature of the eyepiece expands a Field-of-View, FOV, of the camera.

14. The head-mounted device of claim 13 further comprising:
a display waveguide configured to direct display light to the eyebox region, wherein the focusing curvature is configured to focus display light including virtual images to the eyebox region, and wherein the display waveguide includes a cutout to accommodate the camera, the camera being disposed within the cutout of the display waveguide.

15. The head-mounted device of claim 13 or claim 14, wherein the focusing curvature includes a first surface transitioning into a second surface, wherein the first surface is configured to focus light to an eyebox region, and wherein the second surface is configured to focus eyebox image light to the camera, the second surface configured to increase a field-of-view, FOV, of the camera, and optionally
wherein the second surface is approximately planar.
